# NEW EUROPEAN PATENT SPECIFICATION

(11) **EP 0 980 700 B2**
(45) Date of publication and mention of the opposition decision: **14.03.2012**
(45) Mention of the grant of the patent: 26.10.2005
(21) Application number: 99116083.9
(22) Date of filing: 17.08.1999
(51) Int. Cl.: B01D 39/16

(54) **Filter medium having improved filtration and strength characteristics**
Filtermedium mit veränderter Filtrations- und Festigkeitscharakteristik
Médium de filtre avec caractéristique améliorée de filtration et de résistance

(30) Priority: 19.08.1998 US 136591
(43) Date of publication of application: 23.02.2000
(73) Proprietor: Johns Manville International Inc., Denver, CO 80217-5108 (US)
(72) Inventor: Koger, Fritz, York, South Carolina 29745 (US)
(74) Representative: Mai, Dörr, Besier

(56) References cited:
- DE-A1- 4 011 479
- US-A- 3 452 877
- US-A- 5 283 106
- US-A- 5 397 632
- US-A- 5 403 367
- US-A- 5 665 235
- US-A- 5 672 399

## Description

### FIELD OF THE INVENTION

The invention relates to the art of filtration and in particular to a filter medium having a plurality of layers, improved filtration characteristics and improved strength characteristics such that the medium may be pleated without losing its stiffness or being damaged.

### BACKGROUND OF THE INVENTION

The present invention is directed to filters, the construction of filters, the materials used in the construction of filters and the uses of such filters. The invention is further directed to the filtering of particles from fluid streams, for example, air, gas or liquid streams.

Fluid streams such as air, gas or liquid streams frequently carry particulate matter. Common examples are the dust particles one often sees in the air when the angle of incident light is in the right direction. In many instances it is desirable or even necessary to remove such particles. For example, the production of semiconductor materials and microchips requires the use of clean rooms in which the ambient particulate level must be reduced to extremely low levels. Further, federal, state and local regulations require effluent fluid streams from industrial processes to contain particulate matter not exceeding specified levels. Other examples include reducing particulate matter in the air intake streams of internal combustion engines, aircraft passenger cabins and gas turbines, or reducing the particulate matter in the effluent streams of cement manufacturing plants, fiber manufacturing operations, machining operations, milling processes such as flour production, and similar industrial processes spanning almost every industry.

The principles and problems involved in removing particulate matter from fluid streams have been described in numerous patents and publications such as U.S. Patent Nos. 5,672,399, 5,364,456, 5,238,474 and 5,082,476. In general, the problem one encounters in designing a filter medium is one of a trade-off between filter efficiency, filter fluid permeability and filter "lifetime" or capacity. Efficiency may be defined as the ability of a filter to capture particulates rather than allow them to pass. Typically, the more efficiently a given filter medium removes particulate matter from a fluid stream, e.g., air, the lower is its air permeability and the shorter is its lifetime.

The lifetime of a filter may be defined in terms of a selected limiting pressure drop across the filter. When this pressure drop is reached, even after cleaning when cleaning is used, the filter is said to have reached its lifetime because pressure buildup on the inlet side of the filter, i.e., backpressure, has now reached an unacceptable level. The time it takes for a filter medium to reach its lifetime limit is directly related to the load placed on the filter and the inability of the filter medium to release the load, if the filter medium is cleaned. The heavier the load applied to a given filter medium and the less cleanable that medium is, the shorter will be its lifetime. For different filter mediums of equal efficiency, a longer lifetime is generally associated with the filter's ability to achieve a higher particulate loading before reaching the selected pressure drop.

Filter design is focused on two types of filter media: surface-loading media and depth-loading media. Surface-loading media, as their name implies, primarily collect particles on their surface. Often, surface-loading media comprise a dense layer of a material; for example, the cellulose fibers in a paper filter medium. Such filters have a porosity in order to permit a fluid to flow through the medium. As the fluid flows through the filter material, the particulate matter in the fluid is trapped on the upstream (inlet) side of the filter. As a result of such trapping, the filter acquires an initial layer of particulate matter and exhibits a rise in efficiency. Generally, this phenomena is referred to as "seasoning" a filter. With the passage of time, the capacity of the filter is reached, the pressure drop reaches its limit, and the medium has to be replaced or cleaned of accumulated particulates.

As is well known to those skilled in the art, the total capacity of a filter unit utilizing a given filter medium is directly related to the surface area of the filter medium contained in the unit. At a given input rate of particulates, the higher the surface area, the longer the time between required replacement and/or cleaning. Typically, in a given filter unit, the surface area in a filter unit can be increased by using a pleated filter medium in place of a "flat" (i.e., non-pleated) medium. However, it should be noted that while pleating may increase the capacity of a filter unit in an absolute sense, the capacity of the filter medium per unit surface area may remain unchanged. It may also increase due to relatively slower medium face velocities which could result in greater efficiencies and lower pressure drops.

Where cleaning of a filter medium is either impossible or impractical, depth-loading media are frequently used in place of surface-loading media. Generally, depth-loading media comprise a relatively thick tangle of fibrous material as opposed to the relative thin nature of surface-loading media. Depth-loading media are usually defined in terms of their solids content, density or porosity. For example, a depth filter medium defined as 3-4% solids would comprise fibrous medium wherein approximately 3-4% of the overall volume of the medium comprises the fibrous material (solids) and the remaining 96-97% of the volume is fluid (e.g., air, gas or liquid) space.

In addition to being defined by its solids content, a depth-loading medium may also be defined in terms of the diameter of the filaments or fibers constituting the medium. For a filter medium of given solids content, the smaller the diameter of the filaments or fibers used to make the medium, the smaller will be the pore size or interstitial spaces of the resulting medium and the greater will be the medium's efficiency. That is, as one reduces the diameter of the filaments or fibers constituting the filter medium, the more effectively the medium will trap smaller particles.

Generally, depth-loading media are usually thick and have a relatively constant or uniform density. While some density fluctuations may occur, these are of a relatively minor nature and do not substantially effect the filter medium's performance. Furthermore, it is known in the art to combine separate filter media of varying density in order to create an overall, composite filter medium which can be loaded throughout its depth. For example, in inlet to outlet direction, one might combine a first filter medium for removing relatively "large" particulates (e.g., down to 100 microns) with a second filter medium for removing "intermediate" sized particulates (e.g., 100-20 microns) and a third filter medium for removing relatively "fine" particulates (e.g., 20-5 microns). In this hypothetical configuration, particles smaller than about 5 microns may pass through the filters. As those skilled in the art will recognize, changing the nature of the individual filter media can result in smaller or larger particles being allowed to pass through the overall filtration system.

Examples of various filter media can be found in numerous United States patents and in other publications. For example, U.S. Patent No. 5, 672,399 to Kahlbaugh et al. describes a pleated air filter construction having a fine filter medium secured to a coarse filter medium. U.S. Patent No. 4,714,647 to Shipp et al. describes a process for forming a filter medium by sequentially depositing layers of melt-blown thermoplastic fibers having the same composition but differently sized onto a collector to form a web having a gradient across its depth so that large particulates can be trapped across the filter medium depth without prematurely plugging the fine fiber, high efficiency layers. U.S. Patent No. 5,665,235 to Gildersleeve et al. describes a supported fibrous web assembly made by joining a first separate support material in a face-to-face manner to a second separate nonwoven web of multi-component fibers comprising a first polymer and a second polymer such that the second polymer is present on at least a portion of the surface of the multicomponent fibers and has a softening temperature below the softening temperature of the first polymer. U.S. Patent No. 5,397,632 to Murphy et al. describes a nonwoven laminated composite consisting essentially of: (a) an outer substantially fully bonded air-permeable continuous polyester web, (b) an outer substantially fully bonded air-permeable high loft batt [the support], and (c) an intermediate unbonded air-permeable continuous polyester web; wherein (a), (b) and (c) are mechanically secured together by needle-punching.

Additional U.S. patents describing materials which may be used as filtration media include 4,952,560 to Sorrick (a filter media comprising a top, a middle and a bottom layer, the middle layer comprising a support web of cotton fibers and a mesh supported by the web); 5,597,645 to Pike et al. (a filter medium containing an electretized nonwoven web of crimped fibers); 5,496,627 to Bagrodia et al. (composite fiber structure having at least two layers, the first layer being a nonwoven fibrous structure made of grooved fibers and a second layer being a fibrous material that affords high filter efficiency); and 4,732,675 to Badolato et al. (a density gradient filter medium for blood made by joining three separate layers of synthetic fabric laid together in a face-to-face manner in which the separate fibrous layers are provided in the form of a needle-loomed, calendered nonwoven fabric as exemplified by the figures therein).

US 5,283,106 discloses a multilayered filter material comprising nonwovens made of fibers or filaments of identical or different polymers, a first layer comprised of thermoplastic fibers with 3.6-18 den and a second layer comprised of fibers with 0.9-5.4 den. The polymer fibers can e.g. be thermoplastic fibers, polyolefins, polyamide and polyester. The filter material is composed of a depth filter and a fine filter which both have a homogeneous density perpendicular to their surface and have been joined together in such a way that the area covered by the bonding dots does not exceed 75%. The depth filter is from 2 to 20 times thicker than the fine filter, and they have different densities. There is also disclosed a process for manufacturing the filter material.

While the art has disclosed a variety of filtration media which meet and solve various problems, there still exists a need for improved filtration media. In particular, there exists a need for filtration media with an overall improved combination of good stiffness, high capacity and efficiency, the ability to be pleated and good resistance to "layer" separation.

Accordingly, it is the purpose of the present invention to provide a filter medium having a plurality of layers with an improved combination of good filtration and stiffness characteristics, and good layer delamination or separation resistance, and which is pleatable, if pleating is desired.

It is a further purpose of the invention to provide a filter medium having a plurality of layers wherein the medium comprises synthetic filaments (or fibers or yarns) of at least two different denier per filament (dpf), the filter medium resulting from the use of such filaments having improved filtration, stiffness and good delamination-resistance characteristics such that the medium can be pleated for use in a filtration apparatus with no loss of such stiffness and filtration characteristic.

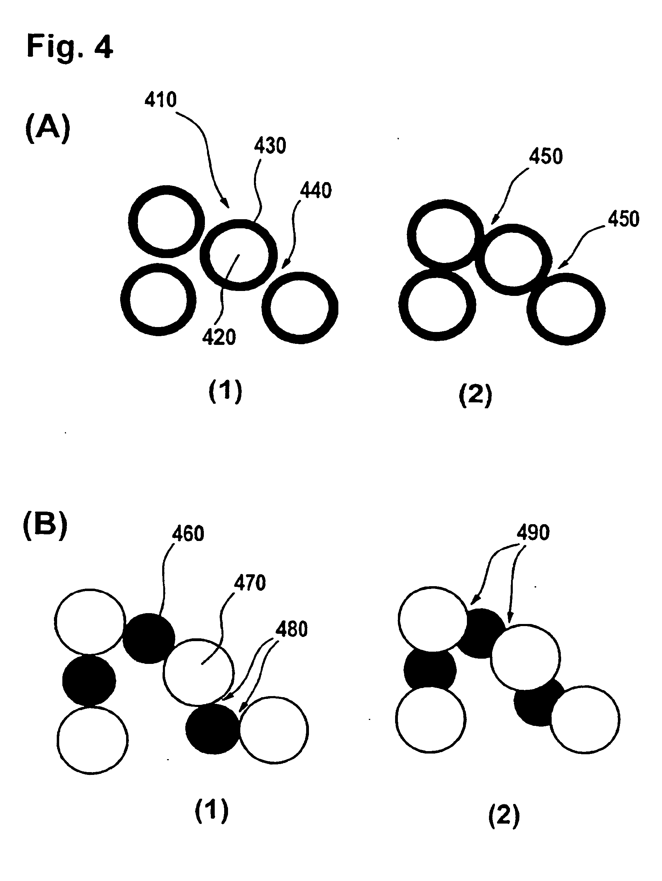

The invention also comprises a nonwoven, spunbonded filter medium having a plurality of layers of synthetic filaments wherein the filaments of a selected layer are (1) of the heterofil type (See Fig. 4). The filaments are made of a thermoplastic material, and preferably of a polyester material. Examples of heterofil fibers or filaments are found in the Encyclopedia of Polymer Science and Engineering, (John Wiley & Sons, New York 1985, Vol. 6, pages 830-831, and Fig. 7 thereon). Examples of heterofil filaments or fibers include side-side, core-and-sheath, multiple-segment, islands-in-the-sea and matrix-fibril fiber structures as shown on page 830, Fig. 7. As used herein, the term "core-and-sheath" may be used both individually and also collectively as signifying all these examples of heterofil filaments.

### SUMMARY OF THE INVENTION

The invention provides a nonwoven filter medium having a plurality of layers according to claim 1.

In one preferred embodiment a heterofil filament of the core-and-sheath type is used in combination with a base polymer filament which is not a core-and-sheath filament, the sheath component of the core-and-sheath filament having a lower softening/melting point than the core component or the base polymer. It is also possible to reverse this embodiment in that the base polymer has a lower melting/softening point than one or both components of the core-and-sheath filament.

In a second preferred embodiment a base filament is used in combination with a non-heterofil filament having a lower softening/melting point; for example, a first higher softening/melting polyester or nylon base polymer in conjunction with a second lower softening/melting polymer. An example is shown in Fig. 4B.

In another preferred embodiment all the filaments are core-and-sheath filaments, with different medium layers having differently sized filaments. If a core-and-sheath filament is used in practicing the invention, the sheath material has a lower melting or softening (melting/softening) point than the core material, and a melting or softening point either lower than or substantially the same as any other filament used to make the filter medium.

In a further preferred embodiment of the invention, the filaments used to make the filter medium are thermoplastic synthetic filaments, polyester filaments being the particularly preferred synthetic filaments.

In an additional preferred embodiment of the invention, approximately 25% by weight of the filter medium has filaments with a dpf from about 0.5 to about 2.5, and approximately 75% by weight of the filter medium has filaments with a dpf from about 2.5 to about 100.

### BRIEF DESCRIPTION OF THE DRAWINGS

Fig. 1 illustrates the spunbond process to make the filter medium of the invention.
Fig. 2 illustrates an embodiment of the filter medium of the invention as it is described in Example 1, wherein a fine filter layer is succeeded by coarser support/filter layers.
Fig. 3 illustrates an embodiment of the invention as it is described in Example 2, wherein a fine filter layer is between two coarser support/filter layers.
Figs. 4A and 4B illustrate the binding of filaments in a one filament environment (core-and-sheath) and the binding of the filaments in a two filament or bicomponent environment, respectively.
Fig. 5 illustrates an embodiment of the invention as is described in Example 3, wherein a BAAB medium is formed in which "two" finer A layers are between two B layers.

### DETAILED DESCRIPTION OF THE INVENTION

As used herein, the term "bicomponent" refers to the use of two filaments made of different polymers which are used to make a single nonwoven matrix or material such as the filter medium of the invention. Tri-component, four-component, and so forth have a similar meaning. For example, a matrix containing polyethylene terephthalate and polyethylene would constitute a bicomponent filament material or matrix. Another example of a bicomponent matrix is one using two polyester materials of different properties; for example, different melting points. Fig. 4B illustrates an exemplary bicomponent system.

As used herein, the term "heterofil" refers to a fiber, filament or yarn with two different, distinct polymers within the fiber, filament or yarn; where the second polymer material has a lower melting or softening point than the first polymer material. The lower softening/melting material or component of the heterofil filament may be used to bind or bond various filaments together. Different heterofil filaments having different lower softening/melting components may be used together or in conjunction with non-heterofil filaments. All or at least some of the filaments in a nonwoven filter material may be bonded together by the lower softening/melting component of the heterofil filament. Heterofil fibers include side-by-side, core-and-sheath, multiple-segment, islands-in-the-sea and matrix-fibril filaments, all of which have a lower melting/softening component and a higher melting/softening component. A bicomponent filter medium, or a bicomponent layer within a multi-layer filter medium, can thus be comprised of a heterofil filament and a non-heterofil filament, two different heterofil filaments, or two non-heterofil filaments. Homofil filaments are those composed for a single polymer material, for example, polyester, polyamide, etc.

All percentages used herein are by weight unless otherwise specified. Certain aspects of the invention relate to the production of fibers, filaments and yarns; the distinction usually being that filaments are usually thought of as being continuous, fibers as having a distinct length, and yarns as being a combination of filaments and/or fibers. However, for purposes herein the terms may be used interchangeably.

The filaments used in practicing the invention may be any synthetic thermoplastic filament such as polyamides, polyimides, polyacrylates, polymethacrylates, polyolefins, polyesters and similar polymers known to those skilled in the art. Further, the filament may be of the core-and-sheath variety as described herein. Polyester filaments are preferred. If a core-and-sheath filament is used it is preferred that the sheath material is a polyester, the core material being a different polyester or other thermoplastic material suitable for practicing the invention.

Nonwoven materials or fabrics, such as the filter medium of the invention, are also called bonded fibers, formed fabrics or engineered fabrics, and are manufactured by processes other than weaving or knitting. The filter medium of the invention can be made by any process known to those skilled in the art which is suitable for making a non-woven material. Examples of the technologies which may be used for the manufacture of nonwoven fabrics include: (1) dry-formed, carded and bonded, (2) thermal-bonded, (3) air-bonded, (4) web-formed, (5) spunbonded, (6) meltblown, (7) spunlaced, (8) needlepunched, (9) laminated, (10) stitchbonded, (11) wet-layed and any similar technologies known to those skilled in the art. The spunbonded technology is preferred for preparing the filter medium of the invention. An excellent summary on nonwoven fabrics and the technologies used to make them may be found in the Encyclopedia of Polymer Science and Engineering, Vol., 10 (John Wiley & Sons, Inc., New York 1987), pages 204-253 and references cited therein.

The nonwoven filter medium of the invention can be made using any number of different "layers" which, for reference, can be designated A, B, C, D, E,_, G, H, .. and so forth. The term "layer" as used herein thus refers to a grouping of filaments which may be identical or which may be different. Thus, each layer may contain one filament, F1, or a plurality of filaments F1, F2, F3, F4, ...,and so forth. (Note: "F' is reserved for filaments, not layers.) For example, using the spunbonded process, each "layer" would be extruded from one or a plurality of rows of spinnerets or dies aligned across a surface, each spinneret or die having a plurality of openings or holes for emergence or spinning of the filament, said openings or holes being from about 10 to about 1000 per spinneret. In a continuous spunbonded process, the surface may be a moving belt, or the dies may move, and the plurality of dies would be preferably aligned across the width of the belt or surface as well as along the belt or surface. Further, the different materials can be laid down in any order. For example, in a three layer system A, B and C, the layer order could be ABC, ACB, BCA, BAC, CAB or CBA. All such combinations and permutations are within the scope of the invention. (Note: as used herein, the order in which the layers are extruded from the dies onto the surface used in manufacturing the nonwoven filter medium of the invention will always be read from left to right. Thus, in an ABC system, the order is A first, B second and C last. However, when in use as a filter medium, the layers can be in either order, flow inlet to flow outlet, depending on how they are placed in the filter unit. Thus one can have; FLOW → ABC or FLOW → CBA. Generally, the support layers are on the flow outlet side.)

Furthermore, in accordance with the invention, each layer of the filter medium may be independently comprised of one or a plurality of filaments F1, F2, F3, F4, ..., etc. Such filaments may be heterofil filaments or homofil filaments. Each filament may extruded from one or a plurality of spinnerets. Thus in an ABC layer system where A = F1 only, B = F2 only and C = F3 only, the filament order may be F1F2F3, F1F3F2, F2F3F1, F2F1F3, F3F1F2, or F3F2F1.

As one may readily determine, the possible combinations and permutations become large very quickly as the number of"layers", types of filaments and number of rows of spinnerets increases. An example best illustrates the possibilities.

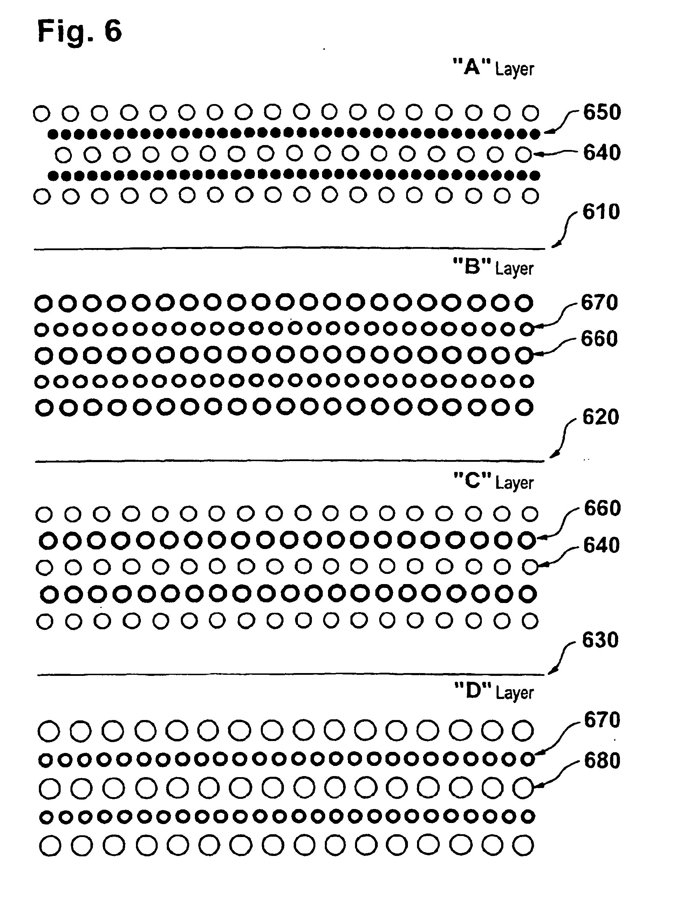

Fig. 6 illustrates a filter medium of four "layers" ABCD in which:
(1) layer A contains two homofil filaments 640 (F1) and 650 (F2) in an alternating pattern F1,F2,F1,F2,F1;
(2) layer B contains two heterofil filaments 660 (F3) and 670 (F4) in an alternating pattern F3,F4,F3,F4,F3;
(3) layer C contains a homofil filament 640 (F1) and a heterofil filament 660 (F3) in an alternating pattern F1,F3,F1,F3,F1; and
(4) layer D contains homofil filament 680 (F5, of larger size than F 1 filament 640) and heterofil filament 670 (F4) in an alternating pattern F5,F4,F5,F4,F5.
Variations are possible. For example, eliminating the central rows of spinnerets in each layer of Fig. 6 would result in layer A being F1,F2,F2,F1, layer B being F3,F4,F4,F3, layer C being F1,F3,F3,F1, and layer D being F5,F4,F4,F5.

Alternatively, one may view Fig. 6 as representing a one layer filter medium formed by using twenty rows of five types of spinnerets laying down filaments F1, F2, F3, F4 and F5 in the order F1,F2,F1,F2,F1,F3,F4,F3,F4,F3, F1,F3,F1,F3,F1, F5,F4,F5,F4,F5.

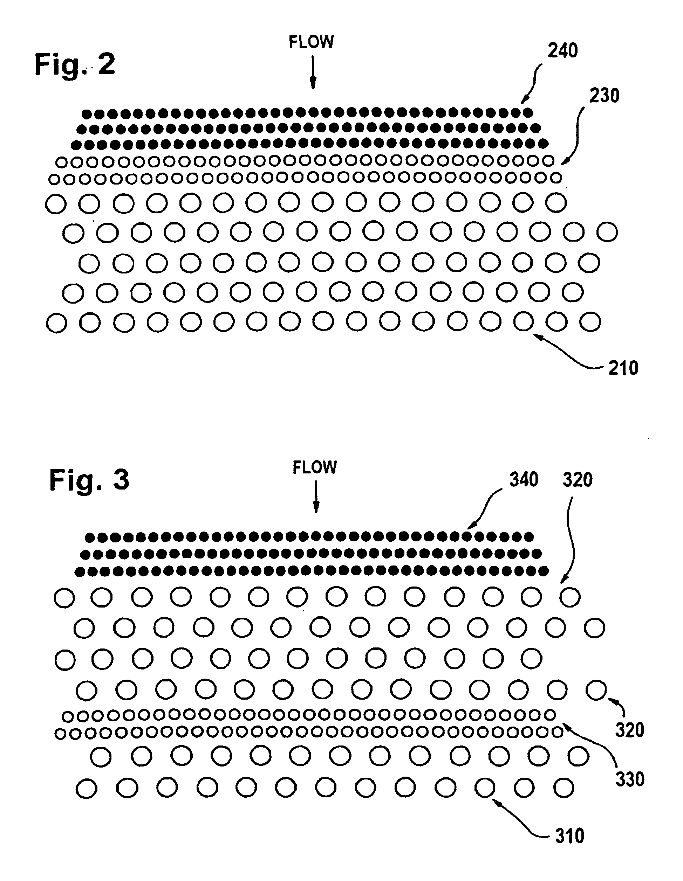

The illustrations shown and discussed herein, as well as variations thereon, are within the scope of the invention in so far as they concern the number of"layers", the number of spinneret rows per layer, and the physical and chemical composition, including the denier, of the filament extruded from each spinneret row. In order to facilitate understanding of the invention and the principles thereof, the Examples given herein and Figs. 2-5 are simplified and may contain repeat layers.

The nonwoven filter medium of the invention comprises a plurality of filaments. This plurality of filaments is divided into two groups having different dpf(denier per filament) values; the first group being about 0.50 to about 40 dpf, preferably about 0.5 to about 2.5 dpf, and most preferably about 1.5 to about 2.0 dpf and the second group being about 2.5 to about 100 dpf, preferably about 4.0 to about 50.0 dpf, and most preferably being about 4.0 dpf to about 5.0 dpf. However, if two layers incorporating identical polymers that can be distinguished by other means should be used in practicing the invention, for example, fiber/filament size or shape, different letter codes would be required for designating these polymers. For example, in hypothetical ABBB filter medium where all "B" layers are polyethylene, two spinnerets per layer, but two adjacent "B" filament layers were of 3.7 dpf and one "B" layer was of 4.4 dpf, one proper designation would be ABBC due to the difference in "B" filament deniers.

When a plurality of filament layers are used in practicing the invention, the percentage of each layer in the product nonwoven filter medium can vary in the range of 5-95%. Thus, in the simplest system, AB, one filament type per layer, the percentage of A filaments can range from 5-95% and the percentage of B filaments can range from 95-5%.

As one skilled in the art would recognize, there is an almost limitless number of possible combinations and permutations arising from the number of filaments laid down to constitute the nonwoven fabric, the type of filament (i.e., polyester, polyamide, polyolefin and similar thermoplastic fibers) and the frequency with which each type arises in a given group of filaments, the possible dpf values of each filament in the combination, the possible use of heterofil as well as homogeneous filaments or fibers, and similar variables which may be considered in preparing the filter medium of the invention. The guidelines given herein are illustrative of the invention and are provided in order that one skilled in the art may practice the invention without undue experimentation. Adjustments according to the guidelines provided herein would enable one skilled in the art to produce a "filter medium" which would in fact find other uses. For example, by reducing fluid permeability below that generally found in filter media designed to remove particulates from air, but retaining some permeability, the resulting material may be used in parachutes (lower air permeability) or as a printable medium (smaller dpf values yield a "smoother surface which is easier to printer on), or in moldable applications (smaller dpf values yield a more pliable fabric)..

For use as a fluid filter medium, the material produced according to the invention preferably has a thickness from about 0.1 to about 1.5 mm (millimeters). However, as those skilled in the art will recognize, this thickness can be changed to meet the specific needs which may arise without changing the spirit and scope of the invention.

The weight of the filter medium of the invention may be any weight in the range of about 50 to about 2000 grams per square meter, or higher, depending on the choice of materials and the number of layers in the filter medium. In fact, there is only a practical limit to the weight, not a theoretical limit. In the preferred embodiments given herein, the weight is from about 80 to about 1000 grams per square meter.

The material or filter medium made according to the invention may be air-bonded, particularly in those instances when a core-and-sheath fiber is used in making the material or medium. The air-bonding temperature is sufficiently high to melt or soften the sheath polymer so that it flows across to adjacent filaments wherever the core-and-sheath fiber contacts other fibers or filaments. However, this temperature is such that the core polymer filament does not melt. For the preferred polyesters, the air bonding temperature is from about 150 to about 260 °C.

Fig. 4A illustrates, before and after heat application, a plurality of heterofil core-and-sheath filaments 410 having a higher softening/melting core component 420 and a lower softening/melting sheath component 430 (the wide dark ring in the figure). As illustrated in Fig. 4A(1), prior to the application the separate filaments of 410 may be adjacent as illustrated at 440. The application of heat causes the sheath 430 to soften or melt, and fuse as illustrated in Fig. 4A(2) at 450.

Fig. 4B illustrates, before and after heat application, a bicomponent, filament geometry comprising a binder polymer 460 and a base polymer 470, wherein the binder polymer 460 has a lower softening/melting point than base polymer 470. As illustrated in Fig, 4B(1), prior to heat application the separate filaments 460 and 470 may be adjacent as illustrated at 480. The application of heat causes filament 460 to soften or melt, and fuse, bind or bond to filament as illustrates in Fig. 4B(2) at 490. While Fig. 4B illustrates the "smaller" of the two filaments as being the lower softening/melting polymer, the situation can be reversed if desired. Furthermore, a heterofil filament can replace one or the other of the filaments illustrated in Fig. 4B, and either the non-heterofil filament or the lower melting component of the heterofil filament can be the binding substance. Generally, the binding filaments can fall within either or both of the 0.5- 2.5 dpf and the 2.5-100 dpf categories, regardless of whether they are heterofil or non-heterofil filaments.

The material or filter medium according to the invention may also be calendered by passing the material between two rollers with the application of pressure and/or heat. The material can also be gauged by this process. The gauging can reduce the pore size of the resulting material and thus increase filter efficiency. Calendering may produce either a smooth or an embossed product. A smooth product is preferred. The calendering temperature for the preferred polyester filaments is from about 150 to about 260 °C and the pressure is from about 5 to about 250 bar.

The material may be heat set before or after calendering. Heat setting temperatures for the preferred polyester materials are from about 150 to about 260 °C.

Different air-bonding, calendering and heat setting temperature and pressures may be employed for thermoplastic materials other than polyesters; e.g. polyamides or polymethacrylates and similar materials. The range of temperatures and pressures are known to those skilled in the art and may also be found in the various volumes of the Encyclopedia of Polymer Science and Technology cited herein and similar reference books.

The material of filter medium according to the invention can optionally be needled by methods known to those skilled in the art. Such needling moves and interlocks the fibers to provide strength and delamination resistance in addition to that obtained in the heat bonding process. Any amount of needling may be used. For example, in the examples herein at least two needling units are used, one making 5-20 stitches/cm², preferably 10-15 stitches/cm², at a penetration of about 11 mm and the other making 30-50 stitches/cm², preferably 35-45 stitches/cm², at a penetration of about 6 mm. Variations on the amount of needling and the number of needles used are deemed within the scope of the invention. Alternatively, no needling may be used.

The following examples are given to illustrate the invention and are not to be taken as limiting the scope or spirit of the invention. It is also foreseen that in some applications media according to the invention may be used in combination with other types of media, for example, conventional media, to improve overall filtering performance. For example, media according to the invention may be laminated to conventional media, be utilized in stack arrangements, or be incorporated, as an integral feature, in to media structures including one or more regions of conventional media. It may be upstream of such media as a pre-filter or for good load, and/or it may be used downstream of conventional media as a high efficiency polishing filter. The many variations possible will be apparent to one skilled in the art from the examples and descriptions contained herein.

### Example 1.

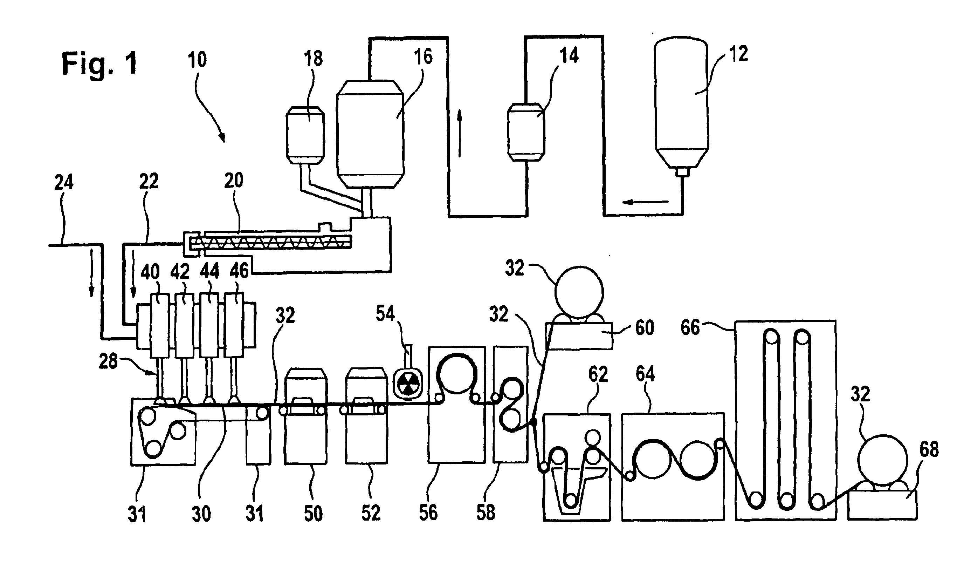

A nonwoven filter medium was prepared using four filament streams in an BBBA configuration, where B = F2, two spinneret rows per layer and A = F1, two spinneret rows per layer. All of the filaments were of the same core-and-sheath variety with the A filaments being 1.5-1.7 dpf and the B filaments being about 4.5 dpf. The nonwoven fabric was prepared using standard equipment as illustrated in Fig. 1 at 10. Core polymer chips were stored in silo 12 before transfer to chip hopper 14 and chip dryer 16. Dried chips were fed from dryer 16 into extruder 20 along with a color agent (optional) from color feeder 18. Core polymer from extruder 20 was fed along line 22 into spin pumps 40, 42, 44 and 46 along with the sheath polymer which was fed into the spin pumps along line 24 where it coats the core polymer. The resultant filaments emerging from the spinnerets (not illustrated) are stretched, then laid down on belt 30 which moves along rollers in roller assemblies 31. The spunwoven material or fabric 32 is laid-off belt 30 and passes through needlers 50 (10-15 stitches/cm² at 11 mm penetration) and 52 (35-40 stitches/cm² at 6 mm penetration) before passing through weight measuring device 54 and entering air-bonder 56 and calendering unit 58. After calendering, the nonwoven fabric 32 may be either wound on auxiliary winder 60 or it may be sent to binder room 62 and/or resin curing/heat setting oven 64 for further heat treatment to cure resin and /or heat set nonwoven fabric 32. Nonwoven fabric 32 can then pass over accumulators 66 before being wound on winder 68.

The core-and-sheath filaments of A and B comprised 70% polyester polyethylene terephthalate as the core polymer and 30% adipate-modified polyester polyethylene terephthalate as the sheath polymer. The spinnerets used to lay down layer A on surface 30 were 304 hole spinnerets and those used to lay down the B layers were in the range 10-1000 hole spinnerets, for example, 60 hole spinnerets. The weight of the fabric was in the range 200-370 g/m² (grams/square meter). The product was air-bonded at 56 at a temperature in the range 230-235 °C, calendered at 58 at a temperature of about 200 °C with an S-wrap configuration as illustrated, and heat set at 64 at a temperature of about 200 °C.

The resulting fabric had a thickness in the range 0.4-0.55 mm and did not crack or crease when bent over a 3 cm (2 inch) diameter mandrel at ambient temperature (15-30 °C). Air permeability was measured by the Frazier test and was found to be in the range 10.6 - 15 m³/m² (35-50 cfm/sq.ft.) with a pressure drop of 12.5 N/m² (0.5 inch) water column.

Fig. 2 illustrates a nonwoven filter medium of the invention made as described herein. The support structure 210 corresponds to the 4.5 dpfB-filaments and the fine filtration structure 230 corresponds to the 1.5-2.0 dpf A-filaments. Inlet fluid flow is along the direction of the arrow. The fine filtration structure was found to afford superior filtration properties and flow distribution, improved cleanability and abrasion resistance and excellent surface loading characteristics relative to commercially available filter media. The support structure BBB provides physical strength and stiffness, and is highly porous to provide high air permeability, little pressure drop and longer filter life. The filter medium prepared according to the invention was found to effectively remove particulates 240, being particularly suitable for particulate of about 25 microns down to a size of about 0.1 microns. (In Figs. 2, 3 and 5, the solid circles represents particulates. Flow is indicated by the FLOW arrow.)

### Example 2

A nonwoven filter medium was prepared as in Example 1 using four filament streams in an BBAB configuration, two spinneret rows per layer. As shown in Fig. 3, the top filament layer 320, which provides for the removal of larger particulates and increased depth-loading of the filter medium, and the support structure 310 are comprised of the 4.5 dpf B-filaments. The fine filtration structure 330 is comprised of the 1.5-2.0 dpf A-filaments. The filter medium prepared according to the invention was found to effectively remove particulates 340, being particularly suitable for particulates of about 25 microns down to a size of 0.1 microns. This sandwiching of the finer filtration layer, layer A, has the additional advantage of providing it greater damage protection.

### Example 3

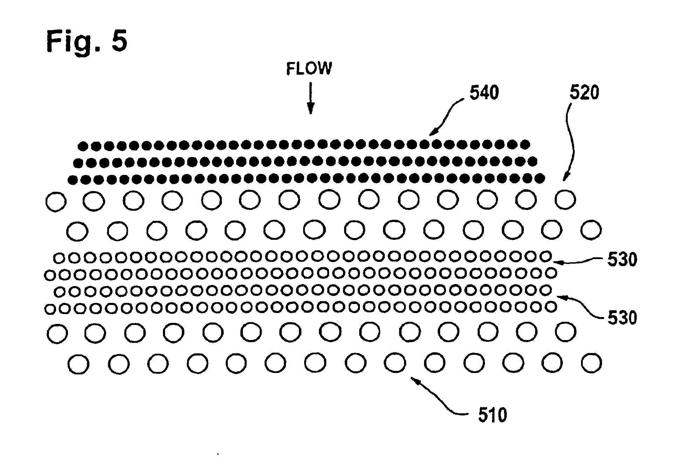

A nonwoven filter medium was prepared as in Example 1 using four filament streams in an BAAB configuration, two spinneret rows per layer. As shown in Fig. 5, the top filament layer 520, which provides for the removal of larger particulates and increased depth-loading of the filter medium, and the support structure 510 is comprised of the 4.5 dpf B-filaments. The fine filtration structure 530 is comprised of the 1.5-2.0 dpf A-filaments. The filter medium prepared according to the invention was found to effectively remove particulates 540, being particularly suitable for particulates of about 25 microns down to a size of 0.1 microns. This sandwiching of the finer filtration layer, layer A, has the additional advantage of providing it greater damage protection.

In preparing the filter medium of the invention by a non-woven process, the present invention has the additional advantage of being a one-step process. In the preferred embodiments, the filter medium of the invention is prepared by a one-step spunbond process as illustrated in Fig. 1.

## Claims

1. A filter medium comprising a nonwoven filter material, particularly a spunbond filter material, having a plurality of layers, laid down in any order, at least one of which layers is comprised of first thermoplastic filaments of about 0.5 to about 2.5 denier-per-filament and at least one of which layers is comprised of second thermoplastic filaments of about 2.5 to about 100 denier-per-filament;
wherein said first and second filaments are both polyester filaments, wherein at least one of said polyester filaments is a heterofil filament, and
wherein any remaining of said plurality of layers is comprised of thermoplastic filaments selected from the group consisting of about 0.5 to about 2.5 and about 2.5 to about 100 denier per-filament filaments.

2. The filter medium according to claim 1, wherein the first thermoplastic filaments are about 1.5 to about 2.0 denier per filament and the second thermoplastic filaments are about 3.5 to about 5.0 denier per filament, and the remaining, if any, of said plurality of layers is comprised of thermoplastic filaments selected from the group consisting of about 1.5 to about 2.0 and about 3.5 to about 5.0 denier-per-filament filaments.

3. The filter medium according to claim 1 or 2, wherein any remaining thermoplastic filaments are selected from the group consisting of polyester, polyamide, polyimide, acrylate, methacrylate and polyolefin filaments.

4. The filter medium according to claim 1-3, wherein the first thermoplastic filament is a heterofil filament, particularly a polyester core-and-sheath filament.

5. The filter medium according to claim 4, wherein the first and second thermoplastic filaments are bonded together by the sheath material of the core-and-sheath filament.

6. The filter medium according to claim 1-3, wherein the first and second thermoplastic filaments are heterofil filaments, particularly polyester core-and-sheath filaments.

7. The filter medium according to claim 1 or 6, wherein the first and second thermoplastic filaments are bonded together by the sheath material of the first and second core-and-sheath filaments.

8. A filter medium according to any of the preceding claims,
wherein the filter material is a spunbond filter material having four layers consisting of one or two A-layers and three or two B-layers, the layers being set down in any order, said A-layer comprising a first polyester filament of about 1.5 to about 2.0 denier-per-filament and said B-layers comprising a second polyester filament of about 3.5 to about 5.0 denier-per-filament;
wherein at least one of said first and second polyester filaments is a heterofil filament,
wherein said polyester filaments are bonded together by the lower softening/melting component of at least one of said heterofil filaments by a heat treatment selected from the group consisting of calendering, air-bonding, oven heating and similar heat treatments, and
wherein said polyester filaments are inter-twined by needling.

9. The filter medium according to claim 8, comprising two B-layers and two A-layers, the layers being set down in any order.

## Patentansprüche

1. Filtermedium, das ein Vliesfiltermaterial, insbesondere ein Spinnvliesfiltermaterial, mit mehreren Schichten, die in einer beliebigen Reihenfolge gelegt sind, umfasst, wobei wenigstens eine der Schichten erste thermoplastische Filamenten mit etwa 0,5 bis etwa 2,5 Denier pro Filament umfasst und wenigstens eine der Schichten zweite thermoplastische Filamenten mit etwa 2,5 bis 100 Denier pro Filament umfasst;
wobei sowohl die ersten als auch die zweiten Filamente Polyesterfilamente sind, wobei wenigstens eines der Polyesterfilamente ein Heterofil-Filament ist, und
wobei irgendwelche verbleibende der mehreren Schichten thermoplastische Filamente umfasst, die ausgewählt sind aus der Gruppe bestehend aus Filamenten mit etwa 0,5 bis etwa 2,5 und aus solchen mit etwa 2,5 bis etwa 100 Denier pro Filament.

2. Filtermedium nach Anspruch 1, bei dem die ersten thermoplastischen Filamente etwa 1,5 bis etwa 2,0 Denier pro Filament besitzen und die zweiten thermoplastischen Filamente etwa 3,5 bis etwa 5,0 Denier pro Filament besitzen und die eventuell restlichen der mehreren Schichten thermoplastische Filamente umfassen, die ausgewählt sind aus der Gruppe bestehend aus Filamenten mit etwa 1,5 bis etwa 2,0 und aus solchen mit etwa 3,5 bis etwa 5,0 Denier pro Filament.

3. Filtermedium nach Anspruch 1 oder 2, bei dem eventuell verbleibende thermoplastische Filamente ausgewählt sind aus der Gruppe bestehend aus Polyester-, Polyamid-, Polyimid-, Acrylat-, Methacrylat- und Polyolefinfilamenten.

4. Filtermedium nach Anspruch 1-3, bei dem das erste thermoplastische Filament ein Heterofil-Filament, insbesondere ein Polyester-Kern- und -Mantelfilament, ist.

5. Filtermedium nach Anspruch 4, bei dem die ersten und die zweiten thermoplastischen Filamente durch das Mantelmaterial des Kern- und Mantelfilaments miteinander verbunden sind.

6. Filtermedium nach Anspruch 1-3, bei dem das erste und das zweite thermoplastische Filament Heterofil-Filamente, insbesondere Polyester-Kern- und -Mantelfilamente, sind.

7. Filtermedium nach Anspruch 1 oder 6, bei dem die ersten und die zweiten thermoplastischen Filamente durch das Mantelmaterial der ersten und der zweiten Kern- und Mantelfilamente miteinander verbunden sind.

8. Filtermedium nach einem der vorhergehenden Ansprüche,
bei dem das Filtermaterial ein Spinnvliesfiltermaterial ist, das vier Schichten aufweist, die aus einer oder zwei A-Schichten und aus drei oder zwei B-Schichten bestehen, wobei die Schichten in einer beliebigen Reihenfolge niedergelegt sind, wobei die A-Schicht ein erstes Polyesterfilament mit etwa 1,5 bis etwa 2,0 Denier pro Filament umfasst und die B-Schichten ein zweites Polyesterfilament mit etwa 3,5 bis etwa 5,0 Denier pro Filament umfassen;
wobei das erste und/oder das zweite Polyesterfilament ein Heterofil-Filament ist (sind),
wobei die Polyesterfilamente durch die niedrigerweichende/-schmelzende Komponente wenigstens eines der Heterofil-Filamente durch eine Wärmebehandlung miteinander verbunden sind, die ausgewählt ist aus der Gruppe bestehend aus Kalandrieren, Thermodiffusion durch Heißluft, Ofenerwärmung und ähnlichen Wärmebehandlungen, und
wobei die Polyesterfilamente durch Vernadeln verschlungen sind.

9. Filtermedium nach Anspruch 8, das zwei B-Schichten und zwei A-Schichten umfasst, wobei die Schichten in einer beliebigen Reihenfolge niedergelegt sind.

## Revendications

1. Un élément filtrant comprenant un matériau filtrant non tissé, plus particulièrement un matériau filtrant filé lié, doté de couches multiples appliquées dans n'importe quel ordre dont au moins une comprend des premiers filaments thermoplastiques d'environ 0,5 à 2,5 deniers par filament, et dont au moins une comprend des seconds filaments thermoplastiques d'environ 2,5 à environ 100 deniers par filament;
dans lequel lesdits premiers et seconds filaments sont tous deux des filaments de polyester, duquel au moins un desdits filaments de polyester est un filament hétérofil, et
dans lequel tout le reste desdites couches est composé de filaments thermoplastiques sélectionnés dans le groupe qui consiste de filaments d'environ 0,5 à 2,5 et environ 2,5 à 100 deniers par filament.

2. L'élément filtrant selon la revendication 1, dans lequel les premiers filaments thermoplastiques sont d'environ 1,5 à 2,0 deniers par filament et les seconds filaments thermoplastiques sont d'environ 3,5 à 5,0 deniers par filament, et les autres desdites couches multiples, s'il en reste, sont composées de filaments thermoplastiques sélectionnés dans le groupe qui consiste de filaments d'environ 1,5 à environ 2 et environ 3,5 à environ 5,0 deniers par filament.

3. L'élément filtrant selon les revendications 1 ou 2, dans lequel tout autre filament thermoplastique restant sont sélectionnées dans le groupe qui consiste de polyester, polyamide, polyimide, acrylate, méthacrylate et de filaments de polyoléfine.

4. L'élément filtrant selon les revendications 1 à 3, dans lequel le premier filament thermoplastique est un filament hétérofil, plus particulièrement un filament d'âme et gaine en polyester.

5. L'élément filtrant selon la revendication 4, dans lequel les premiers et seconds filaments thermoplastiques sont assemblés entre eux par le matériau de gaine du filament d'âme et gaine.

6. L'élément filtrant selon les revendications 1 à 3, dans lequel les premiers et seconds filaments thermoplastiques sont des filaments hétérofils, plus particulièrement des filaments d'âme et gaine en polyester.

7. L'élément filtrant selon les revendications 1 ou 6, dans lequel les premiers et seconds filaments thermoplastiques sont assemblés entre eux par le matériel de gaine des premiers et seconds filaments d'âme et gaine.

8. Un élément filtrant selon n'importe laquelle des revendications précédentes,
dans lequel le matériel filtrant est un matériel filtrant filé lié doté de 4 épaisseurs consistant en une ou deux couches A et trois ou deux couches B, les couches ayant été appliquées dans n'importe quel ordre, ladite couche A comprenant un premier filament de polyester d'environ 1,5 à 2,0 deniers par filament et ladite couche B comprenant un second filament de polyester d'environ 3,5 à 5,0 deniers par filament;
dans lequel au moins un desdits premiers et seconds filaments de polyester est un filament hétérofil,
dans lequel lesdits filaments de polyester sont assemblés entre eux par le compostant à adoucissement/fusion basse d'au moins un desdits filaments hétérofils par un traitement thermique sélectionné dans le groupe qui consiste du calandrage, la liaison à l'air, le réchauffement dans un four ou d'autres traitements thermiques similaires, et
dans lequel lesdits filaments de polyester sont entrelacés à l'aide aiguilles.

9. L'élément filtrant selon la revendication 8 comprenant deux couches B et deux couches A, les couches étant appliquées dans n'importe quel ordre.
